# EUROPEAN PATENT APPLICATION

(11) **EP 2 180 108 A1**
(43) Date of publication of application: **28.04.2010**
(21) Application number: 08167106.7
(22) Date of filing: 21.10.2008
(51) Int. Cl.: E04B 9/02, E04B 9/04, F24D 3/14

(54) **Ceiling panel activations and a modular ceiling comprising these panels**

(71) Applicant: Autarkis B.V., 1321 NA Almere (NL)
(72) Inventor: Gouw, Marcel Reijer, 3841 AH, Harderwijk (NL); Schmitz, Antonius Henricus Hubertus, 6061 CT, Posterholt (NL); van Dorp, Henk Willem, 2716 NL, Zoetermeer (NL)
(74) Representative: van Westenbrugge, Andries

(57) **Abstract**

The invention relates to a modular ceiling comprising a set of rails (4) mountable to a ceiling, and ceiling panels held in place by said rails (4), wherein the ceiling panel (5) comprises an extrusion profile part which comprises an upper wall (14) and a lower wall (13) and lengthwise extending ribs (15) connecting the upper and lower wall and defining lengthwise extending channels in the longitudinal, i.e. extrusion direction, of said ceiling panel.

## Description

### Background

The present invention relates to a ceiling panel for a modular ceiling, a modular ceiling comprising this ceiling panel, and a method for air conditioning a room provided with such a modular ceiling.

Modular ceilings and ceiling panels for these ceilings are well known. In general, the ceiling of a room is provided with main beams parallel to the ceiling and pending from the ceiling. Attached to these main beams usually there are further beams, also parallel to the ceiling and perpendicular to the main beams. Between these further beams, usually ceiling panels are suspended. It is known in the art to provide additional functions to these modular ceilings.

EP-A2-1.371.915 discloses an air conditioning ceiling which has a pipe system for cooling liquid and pouches of phase change material ("PCM") on the pipe system for taking up excess heat and releasing it when needed.

WO-A1-03/064931 discloses a thermo-active ceiling element consisting of a closed box containing phase change material and a lamellar construction for radiating and absorbing heat.

US-A-3.893.506 discloses surface elements for absorbing and releasing heat. Surface elements provided at the outside of a building absorb or release heat, and heat is transported to surface elements in the interior of a building.

EP-B1-633.994 discloses a cooling ceiling suspended from a ceiling of a room. The cooling ceiling may have plastic panels with an upper wall and lower wall sealed at their margins and provided with an inlet and outlet for water to flow over the lower wall. The panels can have an internal structure to spread the water evenly across the panels.

EP-B1-651.106 discloses a cooling ceiling for air conditioning a room. A system of pipes for cooling water runs over ceiling elements provided on the ceiling.

NL-C-1.029.355 discloses an air conditioning ceiling comprising a modular ceiling having ceiling panels having pipes for water running over the ceiling panels at the sides turned to the ceiling, and PCM material provided at the same side of the ceiling panels.

From a environmental point of view, air conditioning a room by temporarily storing excess heat and releasing it at a later stage is very advantageous. Integrating an air conditioning system in a modular ceiling, however, proved to be expensive and complicated. The solutions disclosed in the documents cited above left room for improvement, both in the economics, as well as in the installation side.

### Summary of the Invention

The invention aims to improve known air conditioning ceilings, in particular the ceiling panels for modular ceilings which include an air conditioning system.

The invention seeks to provide ceiling panels which are both easy to produce and to install.

According to a first aspect of the invention this is realized with a modular ceiling comprising a set of mounting parts mountable to a ceiling of a room, and ceiling panels held in place by said mounting parts, wherein the ceiling panels comprise extrusion panels comprising an extrusion profile part which comprises an upper wall and a lower wall and lengthwise extending ribs connecting the upper and lower wall and defining lengthwise extending channels in the longitudinal, i.e. extrusion direction, of said extrusion panels.

The modular ceiling with said ceiling panels is easy to install and can be produced relatively cheap. It provides a simple solution for regulating the temperature in a room without visible objects like radiators is a room. Furthermore, it provides a large area and can be applied in existing situations, for instance in renovation situations. It allows a low flow rate of a fluid when used to cool or heat a room. Furthermore, low temperature differences between current room temperature and fluid suffice.

In an embodiment, said mounting parts comprise rails. This allows easy installation of the ceiling panels.

In an embodiment of the invention, the extrusion panel comprises sealing caps at both ends. In an embodiment thereof, one sealing cap comprises a fluid inlet and a series of ribs closing off the connection between two adjacent channels in such a way as to provide serpentining fluid channels in the panels. In other words, meandering fluid channels are provided in this way.

In an embodiment, at least one of the ribs of the sealing caps connect to at least one of the ribs of the extrusion panel in such a way as to provide one continuous serpentining fluid channel through the panel.

In an embodiment, said channels are filed with PCM. In this way, a simple panel can be produced which can be used to regulate the temperature in a room.

In an embodiment said extrusion panels comprise clamping ends for clamping said extrusion panels to said rails.

In an embodiment said extrusion panels comprise clamping ends at the sides of said extrusion panels and extending in the extrusion direction of said extrusion panels.

In an embodiment said clamping ends and said rails provide a tongue and groove coupling.

In an embodiment said clamping ends comprise a groove and both sides of said extrusion panels which extend in the extrusion direction, and said rails provide tongues fitting in said grooves.

In an embodiment part of the extrusion panels have channels for fluid, and part of the extrusion panels are filled with PCM.

In an embodiment, the modular ceiling further comprises a supply of water coupled to at least one inlet of said extrusion panels, and several extrusion panels have their outlet coupled to an inlet of another extrusion panel, and a controller for circulating said water in said extrusion panels.

In an embodiment said extrusion panels are extruded from a thermoplastic material. This can be for instance polyethylene or polypropylene.

The invention further relates to a method for conditioning the temperature in a room, said room comprising a modular ceiling comprising a set of mounting parts mountable to a ceiling of a room, and ceiling panels held in place by said mounting parts, wherein the ceiling panels comprises extrusion panels comprising an extrusion profile part which comprises an upper wall and a lower wall and lengthwise extending ribs connecting the upper and lower wall and defining lengthwise extending channels in the longitudinal, i.e. extrusion direction, of said extrusion panels., wherein a temperature in said room is measured, and wherein if the measured temperature differs from a set temperature, water is circulated through said extrusion panels until said set temperature is attained.

The invention further pertains to a fire extinguishing system, comprising a modular ceiling comprising a set of mounting parts mountable to a ceiling of a room, and ceiling panels held in place by said mounting parts, wherein the ceiling panels comprise extrusion panels comprising an extrusion profile part which comprises an upper wall and a lower wall and lengthwise extending ribs connecting the upper and lower wall and defining lengthwise extending channels in the longitudinal, i.e. extrusion direction, of said extrusion panels., wherein at least one of said extrusion panels is coupled to a feeding line for feeding a fire extinguishing liquid, such as water, to said extrusion panel, said extrusion panel further comprising a sprayer head comprising a sprayer for spraying said liquid in said panel into said room.

In an embodiment of this fire extinguishing system said sprayer head comprises a valve part for controlling a fluid coupling between a liquid in said extrusion panel and a sprayer in said spraying head.

The invention further relates to a ceiling panel comprising one or more of the characterising features described in the description and/or shown in the attached drawings, and to a method comprising one or more of the characterising features described in the description and/or shown in the attached drawings.

The various aspects discussed in this patent can be combined in order to provide additional advantages described in this description. Furthermore, some of the of the further inventions described in this document can form a basis for a divisional patent.

### Description of the Drawings

The invention will be further elucidated referring to an embodiment of a modular ceiling shown in the attached drawings, showing in:
Figure 1 a room with a modular ceiling of the invention;
Figure 2 a cross section through a modular ceiling;
Figure 3 a transverse cross section through part of an extrusion panel with rail and attachment means ;
Figure 4 a perspective view of extrusion panels with end caps;
Figure 5 a transverse cross section through an extrusion panel;
Figure 6 a cross section through an extrusion panel for PCM material;
Figure 7 a front and back view of end caps with in- and outlets in longitudinal direction;
Figure 8 detailed view of a stop for an end cap;
Figure 9 a cross section through an extrusion panel with an end cap with an inlet and an outlet normal to the extrusion panel;
Figure 10 a perspective view of an end cap with an inlet and an outlet normal to the extrusion panel;
Figure 11 a perspective view of an end cap with an inlet and an outlet in the extrusion direction;
Figure 12 a cross section through an extrusion panel with an end cap of figure 11;
Figures 13a, 13b details of a modular ceiling system including a fire extinghuising system;
Figure 14 a ceiling panel including an extrusion panel of figures 5-12.

### Detailed Description of Embodiments

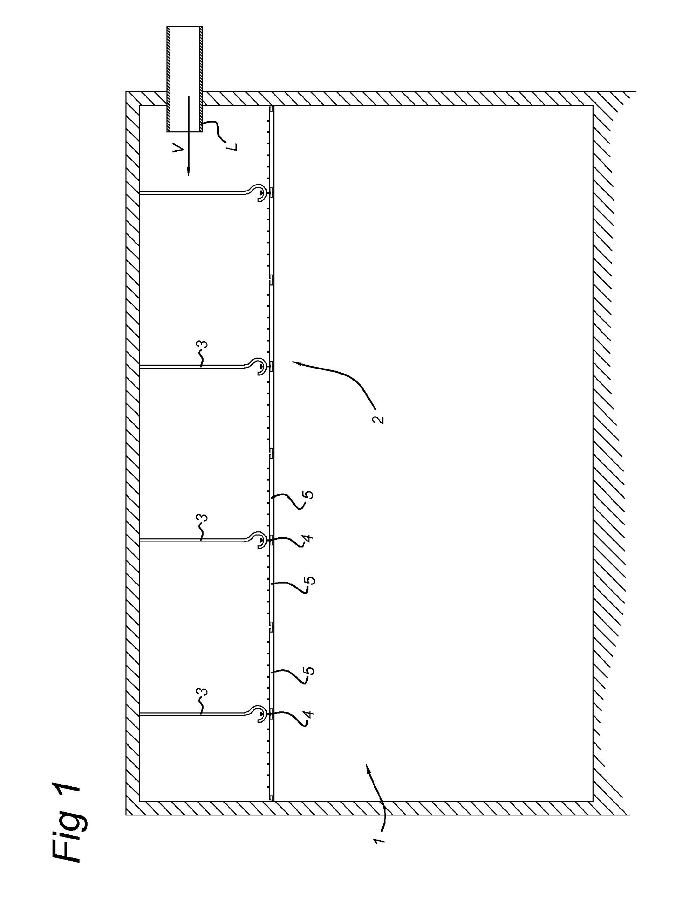

An important aspect of the current invention are the extrusion panels and their use in a modular ceiling which will be described in the following description. The extrusion panels can be used as such as and thus form the ceiling panels. This will be described in the drawings in some embodiments of the invention first in figures 1-12. In another embodiment, the extrusion panels are held in for instance regular ceiling panels, or ceiling panels parts and together form the ceiling panels for a modular ceiling. This use can be considered when for particular reasons another additional property of the modular ceiling is desired. Furthermore, a use will be described in which an additional function or use is added to the extrusion panels.

Figure 1 shows a room 1 comprising a modular ceiling 2. These types of modular ceilings are very usual in buildings like offices and the like. Above the ceiling of room 1, the modular ceiling 2 forms a lower ceiling. Between the original ceiling and the modular ceiling 2, often cabling and other provisions are provided. Between the fixed ceiling of room 1 and the modular ceiling 2, a standard inlet L with a flow V of air is indicated.

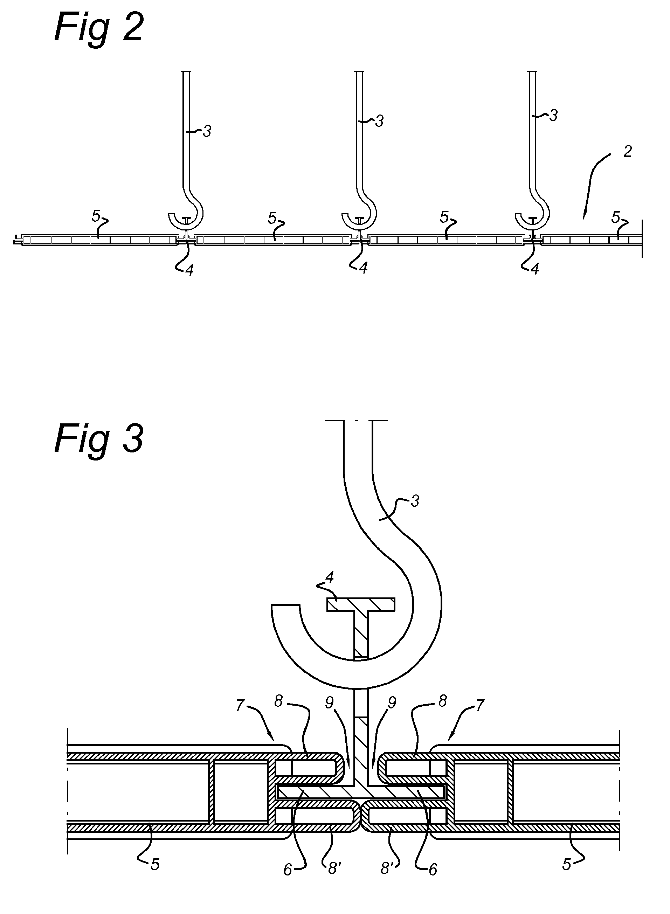

Figure 2 shows a detailed cross-section of the modular ceiling 2. Usually, attachment means 3 are attached to the original ceiling of a room 1. The attachment means 3 in this embodiment are hooks 3. These hooks 3 are applied in rows. Figure 3 shows three of these rows in front view. Pendant to these attachment means are rails 4, which hold ceiling panels 5. Here, as explained, the extrusion panels as such are used as the ceiling panels. Between two panels 5 an attachment rail can be provided which is not attached to the ceiling, in a way shown in figure 1.

Figure 3 shows a detail of the rails 4 and attachment hook 3. The rail 4 is here a H-shaped profile which can for instance be made of metal like aluminium or steel, or from a ridged synthetic material. Thus, the rail can be an extrusion profile. In this embodiment, often metal rails are used. These rails can also be formed from plate material which is bent into an H profile. One of the parts of the H profile is larger in order to form an attachment part 6 for the ceiling panels 5. These ceiling panels 5 have attachment parts 7 extending in the longitudinal direction of ceiling panel 5 (i.e., the direction into the paper) and which cooperates with the attachment parts 6 of rail 4. In this embodiment, the attachment parts 6 of the rail 4 form tongue parts which extend in longitudinal direction of the ceiling panels 5, and which cooperates with groove parts which form the attachment parts 7 of the ceiling panels 5. To that end, the attachment part has an upper part 8 and a lower part 8' between which a groove 9 is formed. This embodiment of the attachment parts 7 of ceiling panels 5 and the attachment parts 6 of rail 4 form a very simple provision for attaching the ceiling panels 5. If required, a reinforcement strip can be inserted in the upper part 8 and lower part 8' of the attachment part, in order to provide ridgidity against bending.

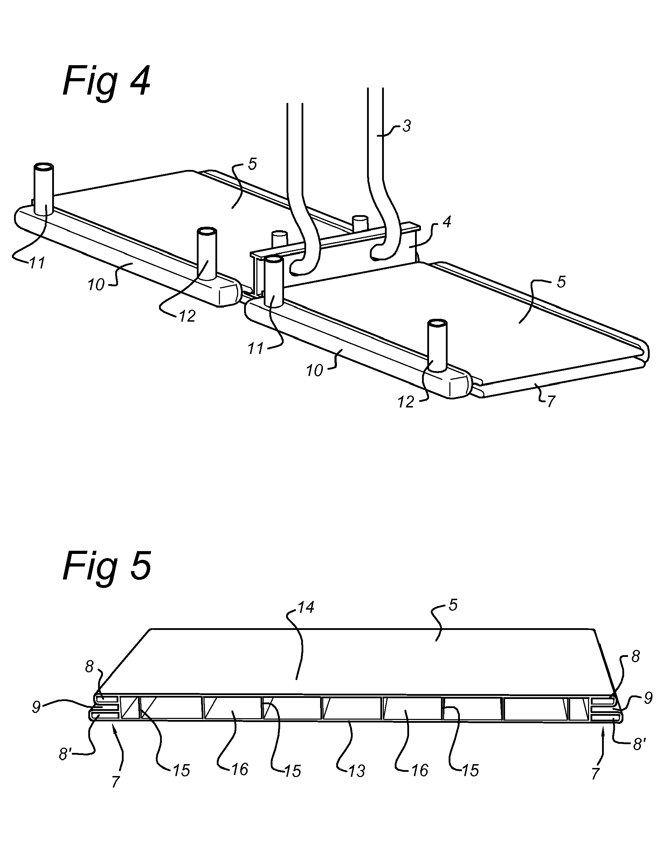

Figure 4 shows in perspective view the upper part of the modular ceiling which faces the original ceiling of a room. It shows how rail 4 is attached to the attachment means 5 which are in turn attached to the original ceiling (not shown here). Furthermore, the ceiling panels 5 have end caps 10 closing off the ceiling panels. In this embodiment, the end caps 10 have inlets 11 and outlets 12 which extend substantially in the normal direction of the ceiling panels 5.

Now first the extrusion panels 5 will be further discussed in Figure 5. In the embodiments discussed so far, the extrusion panels make up the ceiling panes 5. Below, another embodiment or use of these panels will be shown. Figure 5 shows a transverse cross-section through an extrusion panel 5. The extrusion panels 5 are extruded profiles, which are usual made from a plastic which can be easily extruded and which is relatively cheap. In an embodiment, these panels are made of a thermoplastic material. As an easy extrudable thermoplastic material which can be used for the ceiling profiles 5, often polycarbonate, ABS, PVC-u, polyethylene or polypropylene (PP) will be used. The extrusion profile which may form a ceiling panel 5 has a lower wall 13 which is directed towards the interior of the room itself. This can have any desired colour, and/or the surface can have a particular motive which is desired. The panel 5 further has an upper wall 14 which is directed, when the panel 5 is in a mounted state, towards the original ceiling of a room. The panels 5 further has ribs 15 which connect the upper wall 14 and the lower wall 13. The upper wall, lower wall and ribs form lengthwise extending channels or longitudinal channels which extend in the extrusion direction. The ribs 15 provide ridgidity to the panels, and provide a boundary to channels for fluid extending in longitudinal direction. The walls thus are fluid-closed walls. The panel 5 in this embodiment further has a side wall which forms the attachment means 7 for mounting the panels 5 to rail 4, in case the panel forms the ceiling panel. The attachment means 7 of panel 5 have a lower part 8' and an upper part 8 between which a groove 9 is formed. The attachment means also extend in the longitudinal or extrusion direction of panel 5.

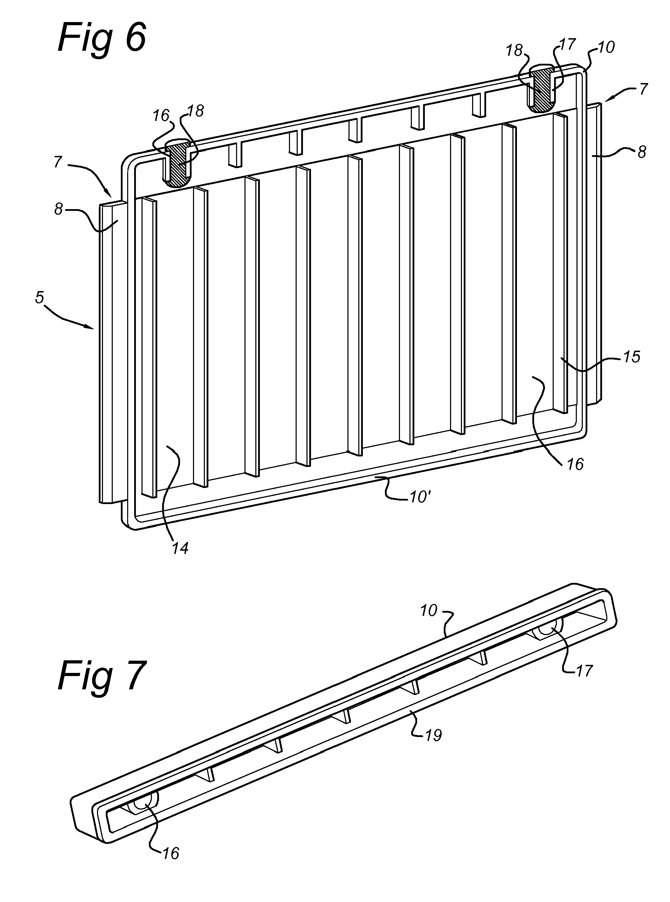

Figure 6 shows a cross-section through a ceiling panel 6 with end cap 10' and end cap 10 which closes off both ends of ceiling panel 5. In this embodiment end cap 10' is a simple closed end cap. The end cap 10 at the opposite end of ceiling panel 5 has an inlet 16 and an outlet 17 which extend in the longitudinal direction of ceiling panel 5. In this embodiment, the inlet 16 and outlet 17 are provided with stops 18 which close off these panels. This embodiment of ceiling panel 5 with end caps 10' and 10 with stops 18 is particularly suited for a ceiling panel filled with so called PCM, or Phase Change Material. PCM material as such is well known in the art. It can take up heat energy when its temperature rises above a certain, predefined temperature, and it can release the stored heat when the temperature is below another predefined temperature. A ceiling panels 5 with this so called PCM material can form a part of a passive cooling ceiling 2. It can also be provided together with other types of ceiling panels or other provisions which together form a cooling or heating ceiling. In these panels with PCM, no fluid needs to flow in the channels.

Figure 7 shows a perspective view, the upper view of the inside of an end cap 10 of Figure 6. The end caps are usually injection moulded plastic parts. The injection moulded plastic parts are durably attached to the ceiling panels 5. In an embodiment, they are glued to the ceiling panels 5 in order to provide a leak tight connection. In an other embodiment, they can be melted upon the ceiling panels or can be welded using for instance ultrasonic welding methods or other welding methods suitable for attaching such parts of for instance thermoplastic material to one another.

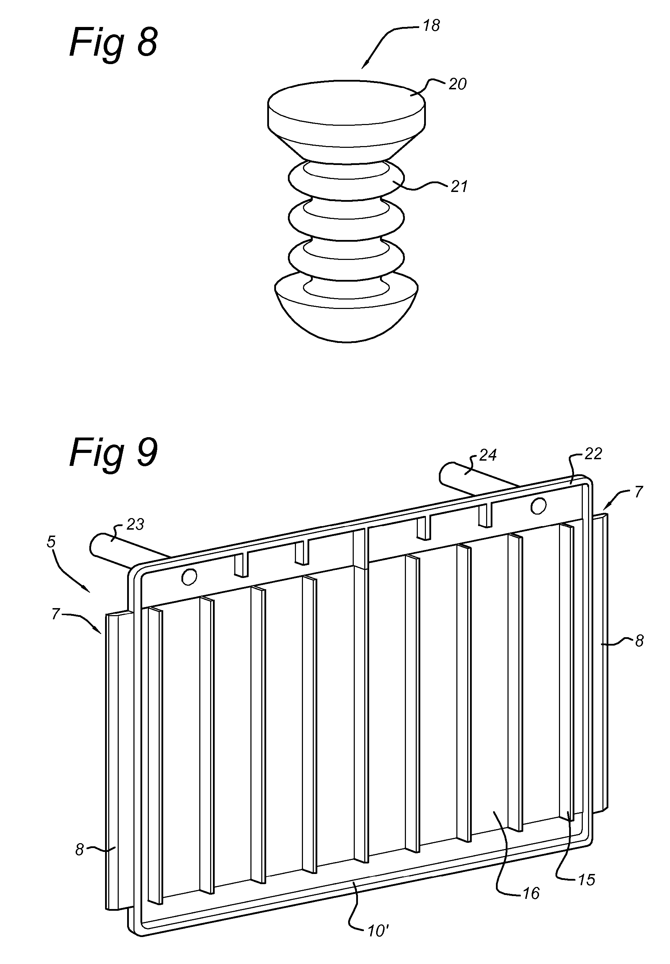

Figure 8 shows in detail a stop 18. This stop 18 has an end part 20 and a stem which is provided with sealing rings 21. In this way, the inlet and outlet can be securely and leak tight sealed. Usually, the end stops are made of a rubbery or rubber like material which is flexible and compressible and can be pushed into holes. The other end opposite end 20 has a cross section larger than the cross section of the sealing rings 21. The length of the stem preferably is larger than the length of an inlet 16 and outlet 17. Furthermore, the diameter of the end opposite end 20 preferably is larger than the diameter of an inlet 16 or outlet 17. Thus, the thickened end opposite end 20 bulges out of the inlet or outlet and thus fixed stop 18 in its position.

Figure 9 shows an alternative embodiment of ceiling panel 5. In this embodiment, the ceiling panel 5 has an end cap 10' which is identical to the end cap of Figure 6. At the opposite end, ceiling panel 5 has an end cap 22 which is provided with an inlet 23 and outlet 24 which extend substantially in normal direction of the ceiling panels. In this embodiment, in cross-section, again it is very well visible how the ribs 15 and the wall together form longitudinal extending channels. A cooling or heating liquid, like water, can flow through these channels from the inlets to the outlets. Notice that here one of the wall parts in the end cap 22 is fixed to a wall 15 of the extrusion panel in a fluid-tight manner in order to force the fluid through the channels and prevent fluid short-circuit, i.e. fluid flowing the shortest way directly from the inlet 23 to the outlet 24.

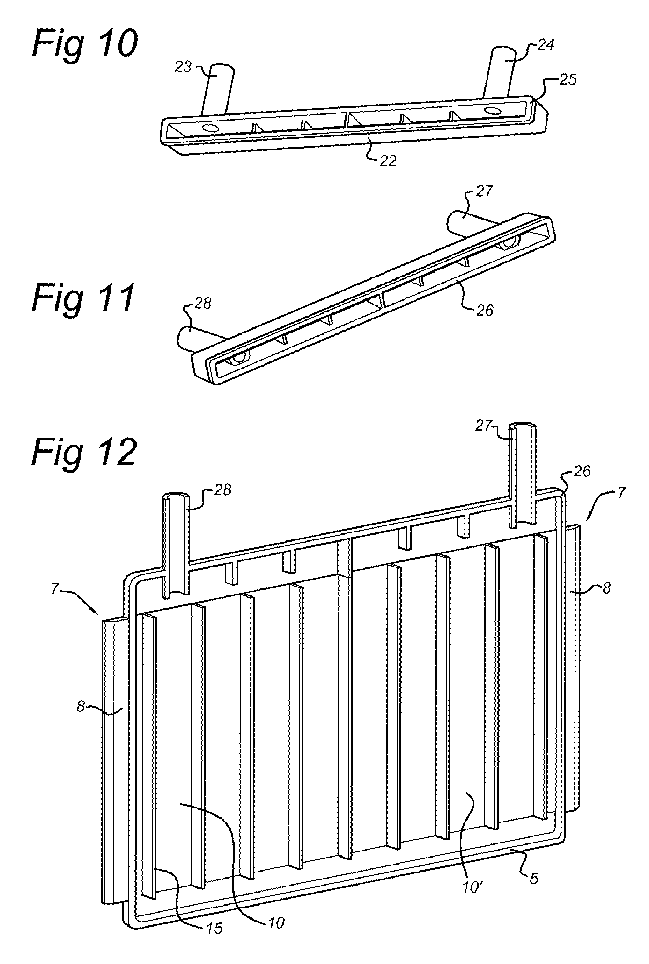

Figure 10 shows in perspective view the end cap 22 of Figure 9. The end cap has an attachment surface 25 which is flat and which provides an attachment surface for attaching the end cap 22 to an end of ceiling panel 5. One of the reinforcement wall parts ends in the same plane of attachment surface 25 as indicted in the drawing.

Figure 11 shows an alternative embodiment of an end cap 26. In this embodiment with an inlet 27 and an inlet 28 which extend in the longitudinal or extrusion direction of an extrusion panel 5.

Figure 12 shows an embodiment of ceiling panel 12 with the end cap of Figure 11. The modular ceiling 2 can be installed to have several functions. In one embodiment, the ceiling panels filled with PCM material are used. In such an embodiment, the PCM material in the ceiling panels 5 will take up excessive heat in a room at a certain moment in time when the temperature is below a certain temperature, the PCM material in the ceiling panels will release the stored heat and will heat the room back to a specified temperature. Thus, the PCM ceiling panels applied in a modular ceiling will provide a passive cooling system. In another embodiment, part of the ceiling panels or all of the ceiling panels can be provided with an inlet and an outlet for a fluid, usually water. In such an embodiment, the inlets and outlets of series of ceiling panels 5 are often interconnected. In this way, water can flow through several ceiling panels either in parallel or in series. In such an embodiment, the modular ceiling can provide an active air conditioning (heating or cooling). If needed, water with a temperature above the room temperature, and at a desired temperature, can flow through the ceiling panels and can increase the temperature of the room. At another stage, water with a temperature below the current room temperature and at a desired temperature can flow through the ceiling panels 5. At such an instance, the modular ceiling can provide cooling of the room. As the surface of the modular ceiling is large, the temperature difference between the fluid and the room can be small. Usually, the temperature of the fluid can be just several degrees above or below the desired temperature.

Thus, it is possible to use the modular ceiling of the current invention as an air conditioning means. The cooled water and the heated water can for instance be provided using for instance geothermic aquifers or other underground reservoirs which have a constant temperature, in combination with heat pumps. This as such is well known to the skilled person.

Another advantage of the modular ceiling panels with water and which are made of thermoplastic material are the following. When a fire commences in a room provided with a modular ceiling of the current invention, the ceiling panels or part of the ceiling panels can melt and water can flow out of the ceiling panels. This will help in order to extinguish an existing or commencing fire. It is thus conceivable, to attach one or more of the inlets of the modular ceiling to a fire extinguishing system. In such an embodiment, when the pressure of the ceiling panel is all of the sudden reduced or drops, which may be detected by pressure sensors monitoring the pressure inside the panels or of the fluid supply system coupled to the panels. The reduction or drop of pressure usually occurs because a whole or part of the ceiling panels 5 are leak because of fire. In such an instance, the fire extinguishing system can provide additional water. This can be combined with other fire sensors in order to further secure the system.

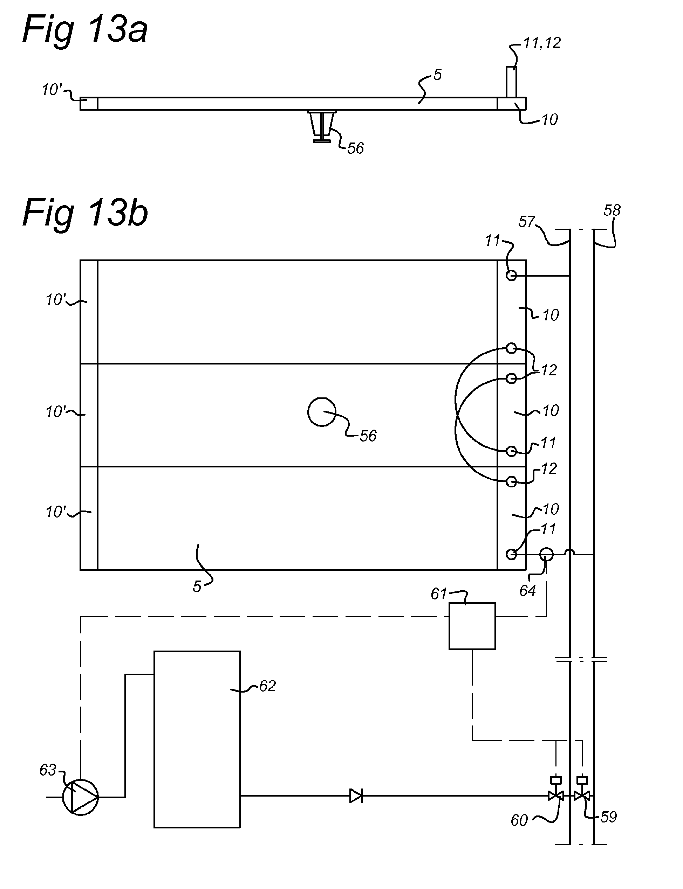

Figures 13a and 13b show an embodiment of such a fire extinguishing system. In figure 13a, a side view of a modified panel 5 is shown. In can further be identical to the panels described here before. In this embodiment, a fire extinguishing head 56 is provided on the panel 5. This head can be functional identical to well known heads. In this application, the known heads can be modified to allow attachment to a panel 5. This, they can be provided with an attachment part which allows gluing or melting onto the material of panel 5.

Figure 13b is a schematic drawing showing the integration of a panel of figure 13a in a fire extinguishing system. Thus, three panels are fluid (here water) interconnected in a set of three panels, and one of these panels is provided with a fire extinguishing head 56, i.e., the central panel 5 is of the type shown in figure 13a. The panels are integrated in a fire extinguishing system. Such a system may comprise the parts and layout indicated in figure 13b. The inlets and outlet of the three panels 5 are interconnected in such a way that in normal operation for cooling or heating, fluid flows from one panel to the next. In the situation of figure 13b, line 57 feeds fluid and line 58 draws fluid. The system comprises a pressure sensor 64, here in the drawing line 58, but it can also be located in the feeding line 57, or in one of the panels. The pressure sensor 64 is operationally coupled to a steering device 61 receiving a pressure signal from the pressure sensor 64.somewhere in the building, a buffer vessel 62 can be provided for holding water for fire extinguishing purposes. It can have a feed line and a pump 63, steered by steering device 61. The steering device can further be operationally coupled to several valves 59, 60 for opening or closing valves is water is needed for extinguishing a (starting) fire. It is also possible to couple the steering device 61 to other fire detecting sensors in stead of or next to the pressure sensor. The fire extinguishing head 64 can comprise a sprayer. It can further comprise a valve which can allow the liquid inside the extrusion panel to be sprayed into the room.

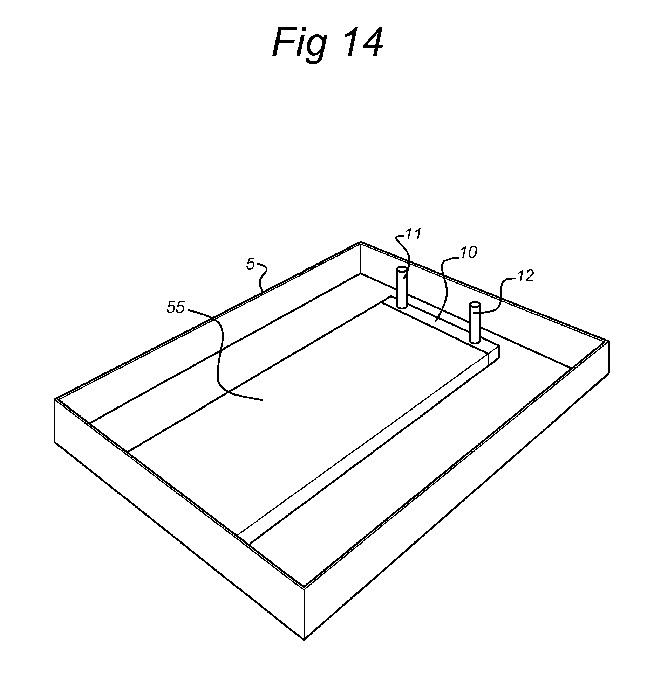

Figure 14 discloses an alternative use of the extrusion panel 5 described above. In this embodiment, extrusion panel (here indicated with) 55 is held in a further traditional ceiling panel 5. The ceiling panel can be used in regular mountings known in the art. This embodiment can be used in cases where the extrusion panels are not suited or liked to be used as ceiling panels in sight. The ceiling panels can be designed to have an aesthetically appealing look, and hold the extrusion panel with is suited for a fluid flow, or a panel filled with PCM material. The extrusion panel 55 can be clamped inside the ceiling panel 5 using for instance elements engaging the ceiling panel and the extrusion panel 55, for instance engaging in the groove 9 described in figure 5.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. A modular ceiling comprising a set of mounting parts mountable to a ceiling of a room, and ceiling panels held in place by said mounting parts, wherein the ceiling panels comprise extrusion panels comprising an extrusion profile part which comprises an upper wall and a lower wall and lengthwise extending ribs connecting the upper and lower wall and defining lengthwise extending channels in the longitudinal, i.e. extrusion direction, of said extrusion panels.

2. The modular ceiling according to claim 1, wherein said extrusion panel comprises sealing caps at both ends.

3. The modular ceiling according to claim 2, wherein one sealing cap comprises a fluid inlet and a series of ribs closing off the connection between two adjacent channels in such a way as to provide serpentining fluid channels in the extrusion panels.

4. The modular ceiling according to claim 3, wherein the ribs of the sealing caps connect to the ribs of the extrusion panel in such a way as to provide one continuous serpentining fluid channel through the extrusion panel.

5. The modular ceiling according to any one of the preceding claims, wherein said channels are filed with PCM.

6. The modular ceiling according to any one of the preceding claims, wherein said ceiling panels comprise clamping ends for clamping said ceiling panels to said rails, in an embodiment thereof said extrusion panels comprise clamping ends at the sides of said extrusion panels and extending in the extrusion direction of said extrusion panels, in another embodiment said mounting parts comprise rails, and said clamping ends and said rails provide a tongue and groove coupling, in an embodiment thereof said clamping ends comprise a groove and both sides of said extrusion panels which extend in the extrusion direction, and said rails provide tongues fitting in said grooves.

7. The modular ceiling according to any on of the preceding claims, wherein part of the extrusion panels have channels for fluid, and part of the ceiling panels are filled with PCM.

8. The modular ceiling according to any one of the preceding claims, further comprising a supply of water coupled to at least one inlet of said extrusion panel panels, and several extrusion panels have their outlet coupled to an inlet of another extrusion panel, and a controller for circulating said water in said extrusion panels.

9. The modular ceiling according to any one of the preceding claims, wherein said extrusion panels are extruded from a thermoplastic material.

10. The modular ceiling according to any one of the preceding claims, wherein said extrusion panels form said ceiling panels.

11. The modular ceiling according to any one of the preceding claims 1-10, wherein said extrusion panels are clamped in said ceiling panels

12. A method for conditioning the temperature in a room, said room comprising a modular ceiling according to any one of the claims 1-11, wherein a temperature in said room is measured, and wherein if the measured temperature differs from a set temperature, water is circulated through said channels of said extrusion panels until said set temperature is attained.

13. A fire extinguishing system, comprising a modular ceiling of any one of the preceding claims 1-12 , wherein at least one of said extrusion panels is coupled to a feeding line for feeding a fire extinguishing liquid, such as water, to said extrusion panel, said extrusion panel further comprising a sprayer head comprising a sprayer for spraying said liquid in said panel into said room.

14. The fire extinguishing system of claim 13, wherein said sprayer head comprises a valve part for controlling a fluid coupling between a liquid in said extrusion panel and a sprayer in said spraying head.
